# EUROPEAN PATENT APPLICATION

(11) **EP 0 982 191 A1**
(43) Date of publication of application: **01.03.2000**
(21) Application number: 99202671.6
(22) Date of filing: 18.08.1999
(51) Int. Cl.: B60Q 1/30, A01C 15/00

(54) **An implement for spreading material**

(30) Priority: 26.08.1998 NL 1009948
(71) Applicant: MAASLAND N.V., 3155 PD Maasland (NL)
(72) Inventor: Van der Lely, Alexander, 3065 NA Rotterdam (NL); Van der Lely, Olaf, 6300 Zug (CH)
(74) Representative: Corten, Maurice Jean F.M.

(57) **Abstract**

An implement for spreading material, such as fertilizer, comprises a hopper (1) for the material to be spread, a spreader member and lights (4, 5). On the outside of the hopper (1) there is disposed an assembly unit (2, 3) in which a light (4, 5) is integrated. The hopper (1) and the assembly unit (2, 3) are designed so as to form together at least one substantially continuous wall portion. As a result thereof the lights (4, 5) can be fitted easily and are well protected, while the implement is compact and easy to clean.

## Description

The invention relates to an implement as claimed in the preamble of claim 1. In such implements the lights, which are necessary for reasons of safety when the hopper has a certain height, are usually fastened to the rear side so as to project (either to the left or to the right, either upwardly or downwardly). This has various disadvantages. The lights are vulnerable and may easily be damaged. They often form an obstacle and are difficult to clean. This also applies to the required electric wires.

The invention aims inter alia at obviating the above-mentioned drawbacks and at providing an improved implement. In accordance with the invention this is achieved by means of the measures described in the characterizing part of claim 1. The use of special assembly units with integrated lights offers the advantage of a simple assembling to (and disassembling from) the hopper, on the one hand. The lights are protected very well, on the other hand. Further the assembly units including the lights are arranged on the outside of the hopper, so that it is not necessary to bore holes into the hopper and there will be no contact between the lights and the contents of the hopper. The hopper forming with each of the assembly units a continuous (straight or curved) wall portion, the implement is moreover compact and easy to clean.

The invention will now be explained in further detail with reference to the accompanying drawings.
Figure 1 is a view in perspective of part of the implement according to the invention;
Figure 2 is a rear view of part of the implement;
Figure 3 is a plan view of part of the implement;
Figure 4 is a side view of part of the implement;
Figure 5 is a schematic cross-section according to the arrows V - V in Figure 4;
Figure 6 is a schematic side view in the direction of the arrow VI in Figure 4, and
Figure 7 is a schematic cross-section according to the arrows VII - VII in Figure 6.

The invention relates to an implement for spreading material, such as fertilizer or material to be applied on roads or in road building (salt, sand, gravel, etc.), for example. Such implements are provided with at least one hopper for the material to be spread and at least one spreader member. Spreader members are known per se; therefore, they are not indicated in the drawings. The frame on which the hopper and the spreader member are disposed, which frame can be connected to a tractor, for example, is also known per se and will not be explained in further detail for the sake of simplicity. The invention mainly relates to the hopper, the lights and one or more protective brackets for the spreader members.

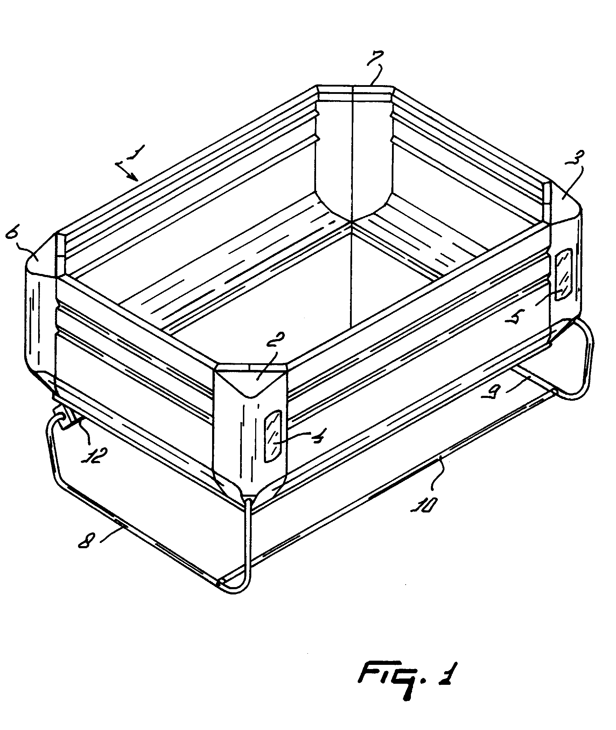

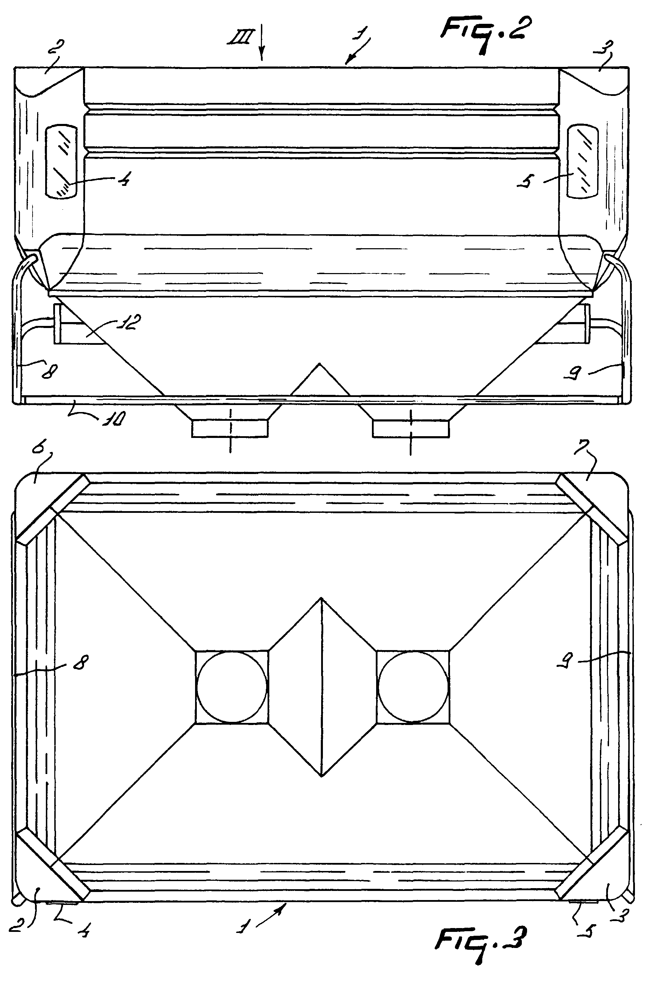

Figure 1 is a view in perspective of part of the implement according to the invention. The hopper 1, shown in Figure 1 in an oblique rear view, has at its upper side a substantially rectangular shape, the corners however being bevelled. At its bottom side the hopper 1, as clearly shown in Figures 2 - 4, comprises two elements having approximately the shape of a pyramid and debouching each into an aperture corresponding to a spreader member. Apart from the two outlet apertures at the bottom side and the open upper side, the hopper 1 is completely closed.

On the outside of the hopper 1, at the rear side thereof, there are disposed two assembly units 2, 3. A light 4, 5, respectively, is integrated in each of the assembly units 2, 3. The hopper 1 and the assembly units 2, 3 are designed so as to form together at least one continuous wall portion. In the embodiment shown, the hopper 1 and the assembly unit 2 constitute together a continuous rear wall portion as well as a continuous side wall portion of the implement.

The assembly unit 2 is disposed so as to "fill" the bevelled corner portion of the hopper 1, the whole forming an almost continuously extending part of the outer wall of the implement, said part comprising no projecting elements. Together with the assembly units 2, 3, the hopper 1 constitutes a substantially flat rear wall and two substantially flat side walls. On the left and the right of the rear side of the hopper 1 there is preferably disposed an assembly unit 2, 3. The assembly units 2, 3 are made e.g. of synthetic material and can be fastened to the outside of the hopper 1.

Of course, in an other, non-shown embodiment, the wall portions may also extend as curved ones. It is also possible for the assembly units 2, 3 not to be disposed on the corners of the hopper 1, but e.g. in recesses at the rear side thereof. In the wall, between the assembly units 2, 3, there may further be provided bends, recesses or projections. However, locally, the assembly units 2, 3 always constitute together with the hopper 1 a substantially continuous portion of a side or rear wall. It is obvious that in a further, non-shown embodiment, the hopper 1 may also be disposed before the tractor, while, in that situation, the lights 4, 5 will be disposed, of course, at the front side of the hopper 1.

On the left and the right of the front side of the hopper 1, there is disposed each time a further assembly unit 6, 7, being substantially identical to the assembly unit 2, 3, but not comprising a light. These further assembly units 6, 7 have almost the same shape as the assembly units 2, 3, but are not provided with lights. They constitute together with the hopper 1 a continuous front side and continuous side wall portions of the implement.

The implement is further provided with protective brackets 8, 9, 10 for the spreader members. The protective brackets 8 and 9, extending at the lateral sides of the bottom side of the hopper 1, are designed as hollow ones. The protective bracket 8 extends from an aperture of the assembly unit 2 to the front side of the implement. The electric wires 16 for the light 4 are fitted in the protective bracket 8. Likewise, the wires 16 for the light 5 are fitted in the bracket 9 which extends from the assembly unit 3 to the front side of the implement. The protective bracket 10 forms a connection between the brackets 8 and 9 and also serves as a strengthening element.

Figures 2, 3 and 4 show as a further illustration a rear view, a plan view and a side view, respectively, of the relevant part of the implement. The implement is provided at its front side with a crossbeam 12 connected with a frame 11, into which crossbeam 12 an end of the protective brackets 8, 9 debouches.

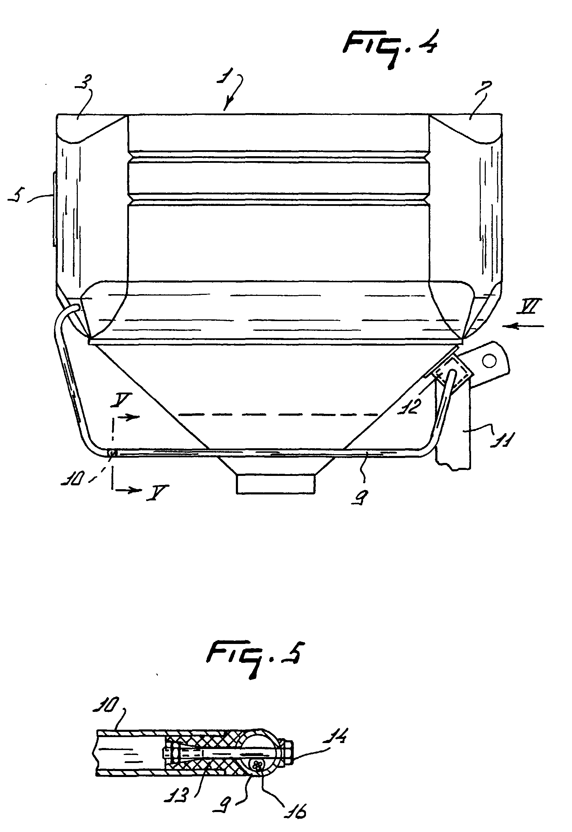

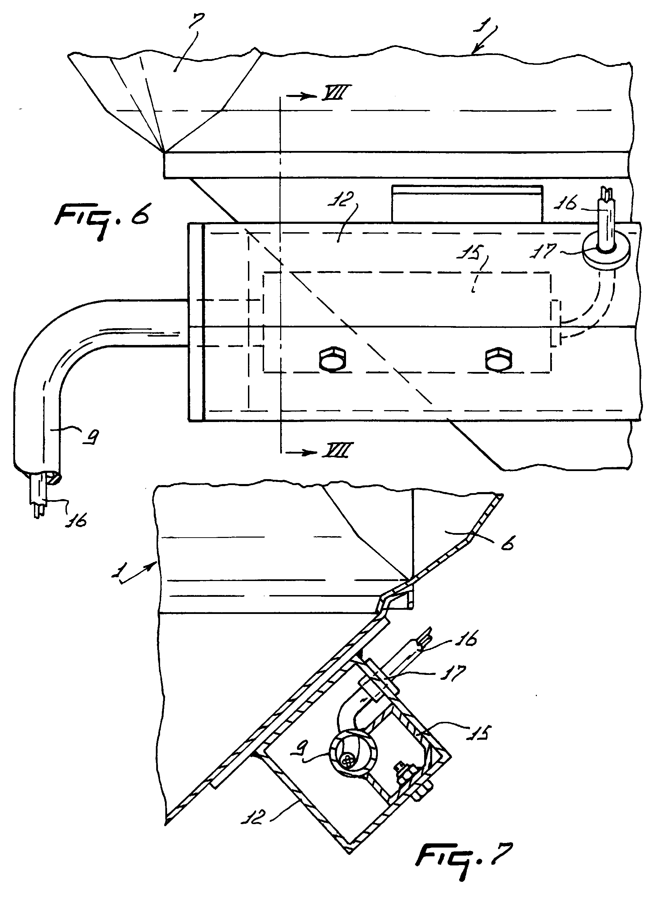

Figure 5 is a schematic cross-section according to the arrows V - V in Figure 4 for illustrating the mutual fastening of the brackets 9 and 10. In the end of the protective bracket 10 there is fitted an end element 13 of synthetic material, which end element 13 is adapted to cooperate with a fastening element 14 inserted through apertures in the protective bracket 9. The elements 13, 14 may constitute a screwed connection, for example. As visible in Figure 5, the wires 16 extend below the fastening element 14 and through the hollow protective bracket 9.

Figure 6 is a schematic side view in the direction of the arrow VI in Figure 4, and Figure 7 is a schematic cross-section according to the arrows VII - VII in Figure 6. The crossbeam 12, into which the protective bracket 9 debouches, is provided at its inner side with a profile 15 that is fastened by means of screws, to which profile 15 the protective bracket 9 is fitted. The crossbeam 12 is additionally provided with an aperture 17 through which the electric wires 16 are passed.

In an advantageous embodiment of the implement, at least part of the outside of the assembly units 2, 3 is designed in a bright colour or a colour contrasting with that of the hopper 1. This improves the safety when using the implement. When the assembly unit 2, 3 is fixed to a corner of the hopper 1, (in a non-shown embodiment) the light 4, 5 can be integrated in the assembly unit 2, 3 in such a manner that it is not only visible from behind, but also from aside. This also improves the safety of the implement.

## Claims

1. An implement for spreading material, such as fertilizer, which implement comprises a hopper (1) for the material to be spread, at least one spreader member and at least one light (4, 5), characterized in that on the outside of the hopper (1) there is disposed at least one assembly unit (2, 3) in which a light (4, 5) is integrated, the hopper (1) and the assembly unit (2, 3) being designed so as to form together at least one substantially continuous wall portion.

2. An implement as claimed in claim 1, characterized in that on the left and the right of the rear side of the hopper (1) there is disposed an assembly unit (2, 3).

3. An implement as claimed in claim 1 or 2, characterized in that on the left and the right of the front side of the hopper (1) there is disposed a further assembly unit (6, 7) which is substantially identical to the assembly unit (2, 3) but not provided with a light.

4. An implement as claimed in any one of claims 1 - 3, characterized in that the implement is provided with at least one protective bracket (8, 9, 10) for the spreader member.

5. An implement as claimed in claim 4, characterized in that a portion (8, 9) of the protective bracket (8, 9, 10) extends from the assembly unit (2, 3) to the front side of the implement, and the electric wires (16) for the light (4, 5) are fitted predominantly in the protective bracket (8, 9, 10).

6. An implement as claimed in claim 4 or 5, characterized in that the implement is provided at its front side with a crossbeam (12) into which a part of the protective bracket (8, 9, 10) debouches.

7. An implement as claimed in claim 6, characterized in that the crossbeam (12) is provided with an aperture (17) through which the electric wires (16) are passed.

8. An implement as claimed in any one of claims 1 - 7, characterized in that at least part of the outside of the assembly units (2, 3) is designed in a bright colour or a colour contrasting with that of the hopper (1).

9. An implement as claimed in any one of claims 1 - 8, characterized in that the assembly unit (2, 3) is fixed to a corner of the hopper (1).

10. An implement as claimed in claim 9, characterized in that the light (4, 5) is integrated in the assembly unit (2, 3) in such a manner that it is visible from behind as well as from aside.

11. An assembly unit which is suitable for being used in an implement as claimed in any one of claims 1 - 10.

12. A hopper which is suitable for being used in an implement as claimed in any one of claims 1 - 10.
